# FASCICULE DE BREVET EUROPEEN

(11) **EP 0 817 905 B1**
(45) Date de publication et mention de la délivrance du brevet: **14.11.2001**
(21) Numéro de dépôt: 97901120.2
(22) Date de dépôt: 20.01.1997
(51) Int. Cl.: F01N 3/02, F01N 3/28

(54) **PRECIPITATEUR POUR COMBUSTION A L'ECHAPPEMENT DE MOTEURS DIESEL OU ESSENCE, ET PROCEDE ASSOCIE**
ABSCHEIDER FÜR DIESEL- ODER BENZIN-MOTORABGAS UND ENTSPRECHENDES VERFAHREN
PRECIPITATOR FOR DIESEL OR PETROL ENGINE EXHAUST COMBUSTION, AND RELATED METHOD

(30) Priorité: 22.01.1996 US 1029 P
(43) Date de publication de la demande: 14.01.1998
(73) Titulaire: INSTITUT FRANCAIS DU PETROLE, 92852 Rueil-Malmaison Cedex (FR); Dullien, Francis.,L., Kitchener, Ontario N2N 1Z4 (CA)
(72) Inventeur: DULLIEN, Francis, A., L., Kitchener, Ontario N2N 1Z4 (CA)
(86) Numéro de dépôt international: FR9700102
(87) Numéro de publication internationale: WO9727385

(56) Documents cités:
- EP-A- 0 434 539
- WO-A-94/13937
- DE-A- 3 806 324
- DE-U- 8 900 467
- US-A- 5 011 810
- PATENT ABSTRACTS OF JAPAN vol. 009, no. 326 (M-441), 21 Décembre 1985 & JP 60 159593 A (TEZUKA KOGYO KK), 21 Août 1985,

## Description

La présente invention concerne l'élimination de polluants contenus dans les gaz d'échappement.

Le principe du dispositif de précipitation à écoulement turbulent consiste à faire passer un fluide en écoulement turbulent dans un canal à travers un grand nombre d'espaces étroits et profonds reliés au moins en partie par des surfaces pleines disposées le long du canal et communiquant librement avec le fluide qui y circule. De fines particules en suspension dans le fluide suivent les fluctuations de vitesse de l'écoulement turbulent et sont ainsi entraînées dans les espaces étroits et profonds où les turbulences disparaissent et où les particules se déposent sur les surfaces pleines par inertie, par interception ou par diffusion brownienne. Le brevet anglais GB-2.264.655B, décrit un tel principe.

Dans le brevet précité, le principe du dispositif de précipitation à écoulement turbulent (TFP) a été décrit concernant notamment la récupération de fines particules contenues dans les courants de gaz. La présente invention concerne de manière plus spécifique une application particulière du principe du dispositif de précipitation à écoulement turbulent permettant de piéger, puis d'oxyder des polluants particulaires présents dans les gaz d'échappement de moteurs à combustion interne tels que des moteurs diesel ou à essence. Les polluants piégés peuvent être oxydés naturellement par la chaleur des gaz d'échappement ou par la mise en oeuvre de brûleurs ou d'éléments chauffants. y compris des éléments chauffants électriques. La température requise pour l'oxydation peut être réduite par l'utilisation d'additifs pour combustibles appropriés ou par l'intermédiaire d'un catalyseur approprié déposé sur les surfaces collectrices, ou encore de manière différente.

Afin de piéger les émissions de véhicules équipés de moteurs à combustion interne, le dispositif TFP doit répondre à des conditions particulières. Il doit être capable de collecter et de piéger des particules de suie ultrafines d'une taille inférieure à 0,5 micromètres, avec un bon rendement (au moins 70 %), il doit présenter une forme compacte comparable aux dimensions d'un silencieux type, il doit pouvoir traiter des flux de gaz relativement importants compris entre environ 50 l/s et environ 500 l/s, il doit fonctionner avec des pertes de charge relativement faibles afin d'éviter des effets indésirables sur les performances des moteurs, la consommation de carburant et par conséquent les émissions de polluants; il doit en outre pouvoir être aisément régénéré une fois installé sans qu'il soit nécessaire de couper le moteur ou d'arrêter le véhicule pour ce faire. Dans le cas de sources stationnaires, il n'y a aucune limitation stricte relative à la taille admissible pour le dispositif TFP.

Un certain nombre de modèles possibles de dispositifs TFP répondant aux conditions mentionnées ci-dessus ont été réalisés. Ils ont en commun les caractéristiques suivantes. Ils se composent d'un canal ou de plusieurs canaux parallèles d'un diamètre compris entre environ 5 mm et environ 30 mm, bien que des dimensions différentes soient possibles. Chaque canal est entouré d'un grand nombre d'espaces ou de cavités profonds dans la direction perpendiculaire à l'axe du conduit et étroits dans le sens parallèle audit axe. Ces espaces peuvent ou non relier des canaux disposés les uns à côté des autres. Toute connection entre des canaux disposés les uns à côté des autres doit être suffisamment petite pour interdire tout écoulement transversal entre les canaux d'écoulement. Le débit des gaz d'échappement dans le canal ou les canaux est typiquement de l'ordre d'environ 5 m/s à environ 50 m/s, bien que d'autres vitesses soient possibles pour un régime turbulent, tandis que les fluctuations de vitesse de l'écoulement turbulent entraînent les émissions de particules dans les espaces qui entourent le canal ou les canaux, où elles se déposent sur les parois formant les cavités. Ces cavités constituent les pièges destinés aux particules émises, le canal ou les canaux n'étant ainsi pas obstrué(s) et autorisant de ce fait l'écoulement des gaz d'échappement. Des températures de fonctionnement basses donnent lieu à un rendement de piégeage plus élevé et sont de ce fait préférables aux températures de fonctionnement élevées pour le dispositif TFP. Le dispositif peut être réalisé avec des métaux appropriés résistant aux températures élevées, tels que de l'acier inoxydable 310, ou en céramique.

En d'autres termes, la présente invention consiste en un appareil destiné à recueillir les particules contenues dans les gaz d'échappement de moteurs à combustion interne, comportant au moins un canal et de préférence plusieurs canaux d'écoulement parallèles non-obstrués d'un diamètre compris entre environ 3 mm et 30 mm et d'une longueur d'environ 10 cm à 100 cm, ledit canal étant entouré de tous côtés d'espaces, cavités ou poches d'environ 1 mm de large et d'environ 5 mm de profondeur dans la direction perpendiculaire à l'axe du canal, lesdits canaux étant tels que les gaz d'échappement s'écoulent à une vitesse comprise entre environ 5 m/s et 50 m/s.

L'appareil selon l'invention comporte également des moyens d'oxydation des particules déposées sur les parois desdits espaces, cavités ou poches, lesdits moyens comprenant un catalyseur approprié déposé sur les parois des canaux ou des additifs pour combustible ou encore des brûleurs, ou encore des résistances électriques chauffantes.

Plus précisément, lesdits canaux peuvent avoir des sections angulaires telles que des sections carrées ou des sections arrondies telles que des sections circulaires.

De plus, lesdits espaces, cavités ou poches peuvent s'étendre de manière ininterrompue sur la totalité de la circonférence dudit canal d'écoulement présentant ainsi soit la configuration d'un canal en forme de soufflet, soit celle qu'aurait un canal formé d'une succession de plaques à orifices placées à intervalles rapprochés dans un conduit.

Selon un autre mode de réalisation, lesdits espaces, cavités ou poches peuvent être constitués de tubes ou capillaires dont les axes sont perpendiculaires à l'axe général du canal d'écoulement.

En outre, lesdits espaces, cavités ou poches et lesdits canaux sont disposés de telle manière que lesdits espaces, cavités ou poches ne relient pas les canaux d'écoulement voisins entre eux.

Selon une autre disposition, le degré de connection est suffisamment petit pour interdire tout écoulement transversal entre lesdits canaux via lesdits espaces, cavités ou poches.

L'invention concerne également une méthode permettant de recueillir les particules contenues dans les gaz d'échappement émis par des moteurs à combustion interne, consistant à faire circuler lesdits gaz d'échappement à travers au moins un canal, de préférence plusieurs canaux parallèles non-obstrués d'un diamètre compris entre environ 3 mm et 30 mm et d'une longueur d'environ 10 cm à 100 cm, ledit canal étant entouré de tous côtés par des espaces, des cavités ou des poches d'une largeur d'environ 1 mm et d'une profondeur d'environ 5 mm dans la direction perpendiculaire à l'axe du canal, lesdits gaz d'échappement s'y écoulant à une vitesse comprise entre environ 5 m/s et environ 50 m/s, de telle manière que les particules se déposent sur les parois desdits espaces, cavités ou poches et n'obstruent pas la section d'écoulement desdits canaux.

Ladite méthode consiste à oxyder les particules déposées sur les parois desdits espaces, cavités ou poches soit au moyen d'un catalyseur approprié déposé sur lesdites parois des canaux, soit en utilisant des additifs pour combustible appropriés, des brûleurs, ou encore par d'autres moyens.

On trouvera ci-après deux calculs réalisés sur des échantillons A et B. qui illustrent le potentiel d'un dispositif TFP sur la base d'un débit de gaz d'échappement de 50 m/s et d'une puissance de 45 kW adaptée aux petites voitures particulières.
A.

| | | | |
|---|---|---|---|
| Longueur du conduit mm | 200 | Espacement des canaux | 5 |
| Taille du conduit ouvert mm | 5 | Surface du dispositif TFP cm² | 72.25 |
| Rendement de récupération | 0,7 | Surface d'écoulement libre cm² | 16 |
| Débit total l/s | 80 | Surface de paroi cm² | 56.25 |
| Nombre de voies parallèles | 64 | Volume du dispositif TFP cm³ | 1445 |
| Vitesse des gaz m/s | 50,00 | Volume de paroi cm³ | 1125 |
| Chute de pression psi | 0,91 | Volume de paroi libre cm³ | 787,50 |
| Charge en suie pour un piège chargé à 10 % (densité de suie 0,3 gm/cm³) gm | | | 23,63 |
| Nombre moyen d' heures pour obtenir un taux de charge en suie de 10 % | | | 4,38 |

B.

| | | | |
|---|---|---|---|
| Longueur du conduit mm | 1000 | Espacement des canaux | 5 |
| Taille du conduit ouvert mm | 30 | Surface du dispositif TFP cm² | 29,70 |
| Rendement de récupération | 0,7 | Surface d'écoulement libre cm² | 18 |
| Débit total l/s | 80 | Surface de paroi cm² | 11,70 |
| Nombre de voies parallèles | 2 | Volume du dispositif TFP cm³ | 2959,9747 |
| Vitesse des gaz m/s | 44,44 | Volume de paroi cm³ | 1169,9747 |
| Chute de pression psi | 0,60 | Volume de paroi libre cm³ | 818,98 |
| Charge en suie pour un piège chargé à 10 % (densité de suie 0,3 gm/cm³) gm | | | 24,57 |
| Nombre moyen d'heures pour obtenir un taux de charge en suie de 10% | | | 4,55 |

- La figure 1 est une vue en perspective d'un dispositif de précipitation à écoulement turbulent selon l'un des modes de réalisation de l'invention. certaines parties n'étant pas représentées pour des raisons de clarté.
- les figures 2, 2A et 2B présentent respectivement une vue en perspective et deux vues en coupe d'un dispositif de précipitation à écoulement turbulent selon un autre mode de réalisation de l'invention,
- la figure 2C est une vue en perspective de l'intersection de deux plaques plissées utilisées dans la structure de la figure 2A,
- les figures 3A à 3C sont différentes vues de la construction d'un dispositif de précipitation à écoulement turbulent selon un autre mode de réalisation de l'invention,
- Les figures 3D et 3E montrent respectivement une perspective et une section d'un autre mode de réalisation de l'invention;
- Les figures 4A et 4B représentent une coupe longitudinale d'un conduit réalisé selon un autre mode de réalisation de l'invention, ainsi qu'une vue éclatée d'une plaque;
- la Figure 5 comprend une coupe longitudinale (fig. 5B) d'un conduit réalisé selon un autre mode de réalisation de l'invention, ainsi qu'une vue éclatée (fig. 5A) de plaques;
- la figure 6 représente respectivement une vue en perspective d'une partie du conduit (fig. 6A) et deux vues en coupe d'un canal d'écoulement (fig. 6B. fig. 6C);
- la figure 7 représente une coupe longitudinale (fig. 7B) d'un conduit réalisé selon un autre mode de réalisation de l'invention, ainsi qu'une vue en perspective (fig. 7A) d'une partie du conduit; et
- la figure 8A représente une vue en perspective de plaques et de leur assemblage selon un empilement réalisé selon un mode particulier de réalisation de l'invention.
- la figure 8B représente en coupe et en éclaté un mode de réalisation de l'invention.

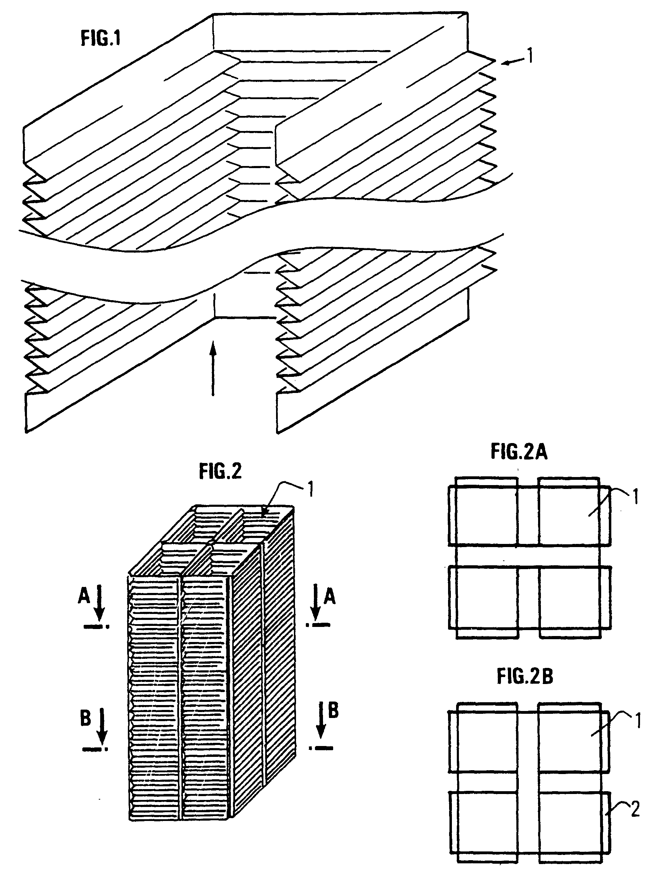

La figure 1 représente un canal unique (1) muni de parois plissées. Les plis peuvent présenter des profils triangulaires (tels que ceux représentés) ou autres (tels que des profils rectangulaires par exemple). La hauteur des plis peut être comprise entre environ 4 mm et environ 40 mm, avec un pas d'environ 1 mm à environ 10 mm, bien que d'autres dimensions soient également possibles. Le rapport de la hauteur sur le pas des plis est compris entre environ 1 et environ 8. Les plis constituent les pièges destinés à recueillir les émissions de particules.

La figure 2A représente une structure en nid d'abeille constituée de quatre parois plissées. Elle représente également deux sections (AA et BB) de la structure :

La section AA (fig. 2A) représente la moitié supérieure et la section BB (fig. 2B) la moitié inférieure desdits canaux à parois plissées. En raison du mode de construction, les parois qui divisent l'unité en quatre compartiments se coupent de manière différente dans la partie supérieure (section AA) et dans la partie inférieure (section BB).

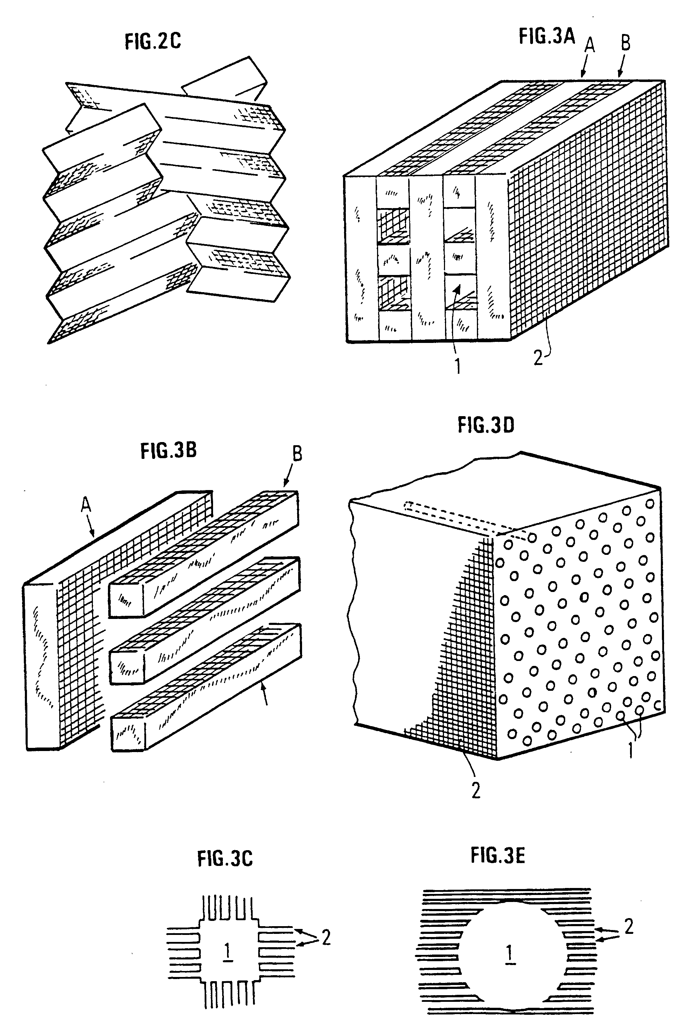

Le principe de construction d'une structure en nid d'abeilles constituée de canaux à parois plissées est présenté dans la figure 2C. Chacune des plaques plissées qui se coupent comporte une entaille ou fente dont la largeur est égale à la hauteur de la cannelure et qui se termine à mi-hauteur de chaque cannelure.

La figure 3A représente un dispositif TFP réalisé à partir d'un monolithe à structure en nid d'abeille en céramique utilisé de manière conventionnelle dans la fabrication de convertisseurs catalytiques d'automobiles. Le monolithe d'origine, constitué de capillaires d'un diamètre d'environ 1 mm est découpé en sections A et certaines de ces sections sont elles-mêmes découpées en bandes B, comme le montre la figure 3B. Les sections A et les bandes B sont ensuite assemblées en utilisant un ciment approprié résistant aux températures élevées pour former le dispositif TFP final. Des canaux ouverts 1 d'un diamètre type d'environ 5 mm à environ 10 mm, entourés de capillaires 2, sont ainsi formés, comme on peut le voir dans la figure 3C. Les gaz d'échappement s'écoulent à travers les canaux non-obstrués 1 d'un diamètre d'environ 5 mm à environ 10 mm, tandis que les particules contenues dans les émissions se déposent sur les capillaires 2 d'un diamètre d'environ 1 mm où elles sont entraînées par les fluctuations de vitesse de l'écoulement turbulent.

La figure 3D présente un autre mode d'utilisation d'une structure en nid d'abeille conventionnelle en céramique. Dans ce cas, des canaux d'écoulement 1 ont été percés dans la structure en nid d'abeille. Les canaux 1 sont percés ou forés dans le monolithe conventionnel dans une direction perpendiculaire à l'axe des capillaires 2.

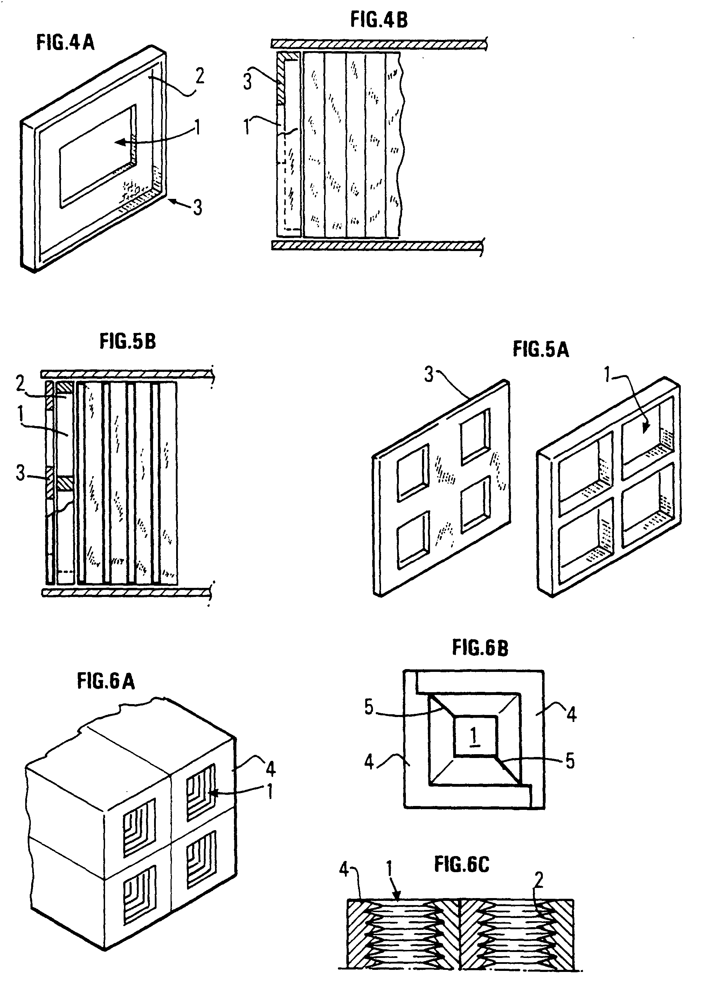

Les figures 4A et 4B représentent un dispositif TFP à canal unique réalisé à partir de plaques 3 comprimées ou pliées ou en céramique. Comme on peut le voir dans la figure 4A, les plaques 3 sont comprimées entre elles par tension au sein du conduit, transmise à travers l'enveloppe finale. Les plaques peuvent être scellées au conduit avec de la colle réfractaire ou par soudage, toutes les dix plaques par exemple. Sur cette figure, le conduit et les canaux 1 associés aux poches de piégeage 2 présentent une configuration carrée, mais de nombreuses autres formes peuvent également être choisies. Les bords repliés sont constitués de petites surfaces relevées permettant leur séparation.

Les figures 5A et 5B représentent un dispositif TFP à quatre canaux réalisé à partir de plaques perforées 3 ou en céramique. Les plaques peuvent être comprimées par tension au sein du conduit transmise par l'enveloppe finale. Les plaques pourraient également être scellées au conduit avec de la colle réfractaire ou par soudage de toutes les dix plaques. Sur cette figure, le dispositif comporte quatre canaux 1 avec leurs poches 2, mais il peut également être doté d'un canal unique ou d'un grand nombre de canaux 1. Sur cette figure, le conduit et les canaux présentent une configuration carrée, mais de nombreuses autres formes peuvent également être choisies.

Les figures 6A, B et C représentent un dispositif TFP à quatre canaux moulé dans du métal ou de la céramique. La figure 6A est une vue en perspective, la figure 6B est une coupe transversale et la figure 6C est une coupe longitudinale. Cette structure peut être logée dans une enveloppe externe métallique et être moulée en sections longitudinales ou autres, ces sections pouvant être maintenues entre elles par compression. Elles peuvent être scellées à l'enveloppe avec du ciment réfractaire. Le dispositif comporte quatre canaux sur ces figures, mais il peut également être doté d'un canal unique ou d'un grand nombre de canaux. Sur ces figures, le conduit et les canaux présentent une forme carrée, mais de nombreuses autres formes sont également envisageables. Une section transversale d'un canal d'écoulement unique est représentée. Le canal est séparé en deux longitudinalement comme le montre la ligne noire sur le schéma, puis moulé sous la forme de deux moitiés identiques. Un nombre quelconque de canaux d'écoulement peut être réalisé en empilant l'enveloppe finale décrite ci-dessus dans une enveloppe sous pression. Elle peut être moulée sous la forme de portions de petite longueur qui sont ensuite emboîtées les unes dans les autres selon une structure imbriquée appropriée.

Le canal d'écoulement est moulé en deux parties. Le trait continu 5 traversant le schéma (approximativement) en diagonale représente la ligne d'assemblage des deux moitiés. Considérée séparément, chacune de ces deux moitiés est une pièce moulée constituée d'un élément de support droit similaire à un fer cornière dont la face interne comporte une multitude de "dents" disposées à intervalles rapprochés les unes des autres et présentant la forme montrée sur le schéma. La figure 6C, qui est une coupe longitudinale. représente deux canaux (1) séparés et entourés par des parois pleines 4 munies de "dents" formant les poches de piégeage (2). Les deux canaux représentés sur la coupe longitudinale de la figure 6C présentent en fait la forme de deux soufflets. Ce mode de réalisation constitue simplement un autre mode de construction de la géométrie du mode de réalisation présenté dans les figures 1 et 2.

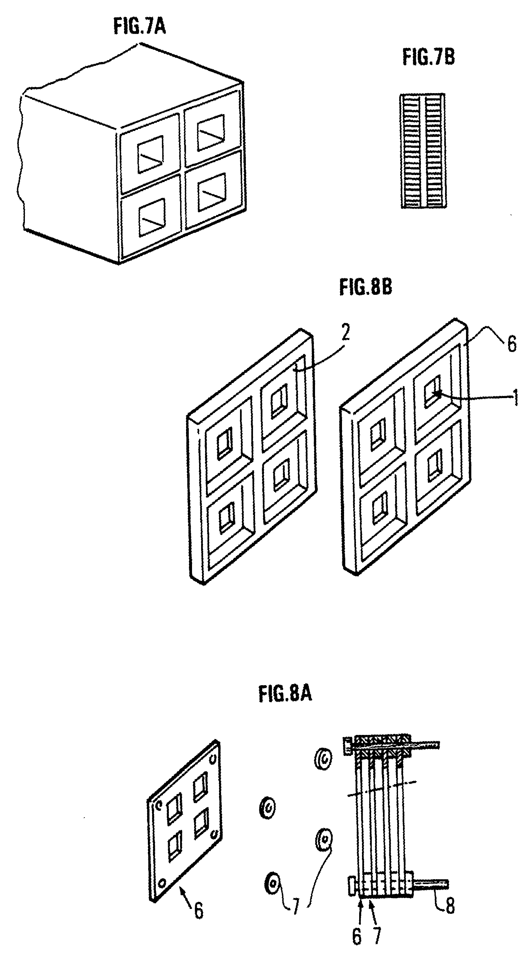

Les figures 7A et 7B représentent un dispositif TFP à quatre canaux réalisé en métal ou en mailles, en matelas de fibres ou en éponge de céramique et logés dans une enveloppe externe métallique. La zone grisée représente les mailles, les matelas de fibres ou l'éponge. Une structure en nid d'abeille peut également être utilisée. Cette figure présente quatre canaux de forme carrée; il est également possible de réaliser un canal unique ou un grand nombre de canaux de différentes formes. La figure 7B représente une coupe transversale d'une structure en nid d'abeille avec une séparation centrale. Les intersections aux parois de séparation peuvent être réalisées de différentes manières en vue d'obtenir la résistance requise. Une structure ouverte en éponge est également possible.

La figure 8A représente un dispositif TFP à quatre canaux réalisé à partir de plaques 6 séparées par des rondelles 7. Des tiges de compression 8 longitudinales assemblent lesdits éléments 6, 7.

La figure 8B représente un dispositif TFP réalisé à partir d'un empilement de plaques céramiques 6 munies de sections en saillie faisant office de rondelles. En d'autres termes, un interstice est formé sur une face d'une plaque du fait d'un évidement important dans la profondeur de ladite plaque.

## Revendications

1. Appareil permettant de recueillir les particules contenues dans les gaz d'échappement de moteurs à combustion interne, comportant au moins un canal (1), de préférence plusieurs canaux d'écoulement parallèles non-obstrués, d'un diamètre d'environ 3 mm à 30 mm et d'une longueur d'environ 10 cm à 100 cm, ledit canal étant entouré de tous côtés par des espaces, des cavités ou des poches (2) d'une largeur d'environ 1 mm et d'une profondeur d'environ 5 mm dans la direction perpendiculaire à l'axe du canal, lesdits canaux étant tels que les gaz d'échappement s'écoulent à une vitesse comprise entre environ 5 m/s et 50 m/s.

2. Appareil selon la revendication 1, comportant également des moyens d'oxydation des particules déposées sur les parois desdits espaces, cavités ou poches (2), lesdits moyens comportant un catalyseur approprié déposé sur les parois des canaux, ou des additifs pour combustible ou des brûleurs, ou encore des résistances électriques chauffantes.

3. Appareil selon les revendications 1 ou 2, **caractérisé en ce qu'**il est réalisé en métal ou en céramique résistant aux températures élevées.

4. Appareil selon l'une quelconque des revendications précédentes. **caractérisé en ce que** lesdits canaux (1) peuvent comporter des sections angulaires telles que des sections carrées ou des sections arrondies telles que des sections circulaires.

5. Appareil selon l'une quelconque des revendications précédentes, **caractérisé en ce que** lesdits espaces, cavités ou poches (2) peuvent s'étendre de manière ininterrompue sur la totalité de la circonférence dudit canal d'écoulement (1) présentant ainsi soit la configuration d'un canal en forme de soufflet, soit celle qu'aurait un canal formé d'une succession de plaques à orifices placées à intervalles rapprochés dans un conduit.

6. Appareil selon l'une quelconque des revendications 1 à 4, **caractérisé en ce que** lesdits espaces, cavités ou poches (2) peuvent être constitués de tubes ou de capillaires dont les axes sont perpendiculaires à l'axe général du canal d'écoulement.

7. Appareil selon l'une quelconque des revendications précédentes, **caractérisé en ce que** lesdits espaces, cavités ou poches (2) et lesdits canaux d'écoulement (1) sont disposés de telle façon que lesdits espaces, cavités ou poches (2) ne relient pas les canaux d'écoulement voisins entre eux.

8. Appareil selon les revendications 1 à 6, **caractérisé en ce que** lesdits espaces, cavités ou poches (2) et lesdits canaux d'écoulement sont disposés de telle façon que le degré de connection est suffisamment petit pour interdire tout écoulement transversal entre lesdits canaux (1) via lesdits espaces, cavités ou poches (2).

9. Méthode permettant de recueillir les particules contenues dans les gaz d'échappement de moteurs à combustion interne, consistant à faire passer lesdits gaz d'échappement à travers au moins un canal, de préférence à travers plusieurs canaux d'écoulement parallèles non-obstrués d'un diamètre d'environ 3 mm à 30 mm et d'une longueur d'environ 10 cm à 100 cm, ledit canal étant entouré de tous côtés par des espaces, des cavités ou des poches (2) d'une largeur d'environ 1 mm et d'une profondeur d'environ 5 mm dans une direction perpendiculaire à l'axe du canal, lesdits gaz d'échappement s'y écoulant à une vitesse comprise entre environ 5 m/s et environ 50 m/s, de telle manière que les particules se déposent sur les parois desdits espaces, cavités ou poches et n'obstruent pas la section transversale desdits canaux d'écoulement.

10. Méthode selon la revendication 9, **caractérisée en ce qu'**elle consiste en outre à oxyder les particules déposées sur les parois desdits espaces, cavités ou poches au moyen d'un catalyseur approprié déposé sur lesdites parois des canaux ou en utilisant des additifs pour combustible, des brûleurs, ou d'autres moyens.

## Patentansprüche

1. Vorrichtung zum Sammeln von in Abgasen von Brennkraftmaschinen enthaltenen Partikeln, wenigstens einen Kanal (1), vorzugsweise mehrere nicht verlegte parallele Strömungskanäle eines Durchmessers umfassend, der zwischen etwa 3 mm und 30 mm liegt und über eine Länge von etwa 10 bis 100 cm verfügt, wobei der Kanal auf allen Seiten von Räumen, Ausnehmungen oder Taschen (2), einer Breite von etwa 1 mm und einer Tiefe von etwa 5 mm in der Richtung senkrecht zur Achse des Kanals umgeben ist, wobei diese Kanäle derart sind, dass die Auslassgase bei einer Geschwindigkeit zwischen etwa 5 m/s und 50 m/s strömen.

2. Vorrichtung nach Anspruch 1, ebenfalls Mittel zur Oxidation der auf den Wandungen dieser Räume, Ausnehmungen oder Taschen (2) abgeschiedenen Partikel umfassend, wobei diese Mittel einen geeigneten Katalysator, der auf den Kanalwandungen abgeschieden ist oder Additive für Brennstoff oder Brenner oder auch heizende elektrische Widerstände umfassen.

3. Vorrichtung nach einem der Ansprüche 1 oder 2, **dadurch gekennzeichnet, dass** sie aus gegen erhöhte Temperaturen beständigem Metall oder beständiger Keramik hergestellt ist.

4. Vorrichtung nach einem der vorhergehenden Ansprüche, **dadurch gekennzeichnet, dass** diese Kanäle (1) Winkelquerschnitte, wie beispielsweise quadratische Querschnitte oder abgerundete Querschnitte wie zum Beispiel Kreisquerschnitte, umfassen können.

5. Vorrichtung nach einem der vorhergehenden Ansprüche, **dadurch gekennzeichnet, dass** diese Räume, Hohlräume oder Taschen (2) sich ununterbrochen über die Gesamtheit des Umfangs dieses Strömungskanals (1) erstrecken können und so entweder die Konfiguration eines Kanals in Form eines Balgens oder die aufweisen können, die ein Kanal hätte, der aus einer Aufeinanderfolge von Platten mit Öffnungen gebildet ist, welche unter geringen Abständen in einer Leitung angeordnet sind.

6. Vorrichtung nach einem der Ansprüche 1 bis 4, **dadurch gekennzeichnet, dass** diese Räume, Hohlräume oder Taschen (2) gebildet sein können aus Rohren oder Kapillaren, deren Achsen senkrecht zur allgemeinen Achse des Strömungskanals verlaufen.

7. Vorrichtung nach einem der vorhergehenden Ansprüche, **dadurch gekennzeichnet, dass** diese Räume, Hohlräume oder Taschen (2) und diese Strömungskanäle (1) derart angeordnet sind, dass diese Räume, Hohlräume oder Taschen (2) die einander benachbarten Strömungskanäle nicht verbinden.

8. Vorrichtung nach einem der Ansprüche 1 bis 6, **dadurch gekennzeichnet, dass** diese Räume, Hohlräume oder Taschen (2) und diese Strömungskanäle derart angeordnet sind, dass der Grad der Verbindung ausreichend klein ist, um jede Querströmung zwischen diesen Kanälen (1) über diese Räume, Hohlräume oder Taschen (2) zu unterbinden.

9. Verfahren zur Ermöglichung des Sammelns der in den Abgasen einer Verbrennungskraftmaschine enthaltenen Partikel, darin bestehend, dass man diese Auslassgase durch wenigstens einen Kanal, bevorzugt durch mehrere parallele nicht verlegte Strömungskanäle von einem Durchmesser von etwa 3 bis 30 mm und einer Länge von etwa 10 cm bis 100 cm, strömen lässt, wobei dieser Kanal auf allen Seiten von Räumen, Hohlräumen oder Taschen (2) einer Breite von etwa 1 mm und einer Tiefe von etwa 5 mm in einer Richtung senkrecht zur Achse des Kanals umgeben ist, wobei diese Auslassgase hierin bei einer Geschwindigkeit zwischen etwa 5 m/s und etwa 50 m/s derart strömen, dass diese Partikel sich auf den Wandungen dieser Räume, Hohlräume oder Taschen abscheiden und nicht den Querschnitt dieser Strömungskanäle verlegen.

10. Verfahren nach Anspruch 9, **dadurch gekennzeichnet, dass** es darin besteht, die auf den Wandungen dieser Räume, Hohlräume oder Taschen abgeschiedenen Partikel vermittels eines geeigneten Katalysators zu oxidieren, der auf diesen Wandungen der Kanäle abgeschieden ist oder indem Additive für Brennstoff, Brenner oder andere Mittel verwendet werden.

## Claims

1. Apparatus for collecting the particles contained in the exhaust gases of internal combustion engines, comprising at least one channel (1), preferably a plurality of unobstructed parallel flow channels, with a diameter of about 3 mm to 30 mm and a length of about 10 cm to 100 cm, said channel being surrounded on all sides by spaces, cavities or pockets (2) with a width of about 1 mm and a depth of about 5 mm in the direction perpendicular to the axis of the channel, said channels being such that the exhaust gases flow at a velocity of between about 5 m/s and 50 m/s.

2. Apparatus according to claim 1, also comprising means for oxidation of the particles deposited on the walls of said spaces, cavities or pockets (2), said means comprising an appropriate catalyst deposited on the walls of the channels, or fuel additives or burners, or even electrical resistance heaters.

3. Apparatus according to claims 1 or 2, **characterised in that** it is made of metal or of ceramic material resistance to high temperatures.

4. Apparatus according to any one of the preceding claims, **characterised in that** said channels (1) can comprise angular sections such as square sections or rounded sections such as circular sections.

5. Apparatus according to any one of the preceding claims, **characterised in that** said spaces, cavities or pockets (2) can extend continuously over the entirety of the circumference of said flow channel (1) thus exhibiting either the configuration of a channel in the form of a bellows, or that of a channel formed by a succession of orifice plates placed at short intervals in a conduit.

6. Apparatus according to any one of claims 1 to 4, **characterised in that** said spaces, cavities or pockets (2) can be constituted by tubes or capillaries the axes of which are perpendicular to the general axis of the flow channel.

7. Apparatus according to any one of the preceding claims, **characterised in that** said spaces, cavities or pockets (2) and said flow channels (1) are disposed such that said spaces, cavities or pockets (2) do not link the neighbouring flow channels to one another.

8. Apparatus according to claims 1 to 6, **characterised in that** said spaces, cavities or pockets (2) and said flow channels are disposed such that the degree of connection is sufficiently low to prevent any transverse flow between said channels (1) via said spaces, cavities or pockets (2).

9. Method for collecting the particles contained in the exhaust gases of internal combustion engines, consisting in passing said exhaust gases through at least one channel, preferably through a plurality of unobstructed parallel flow channels, with a diameter of about 3 mm to 30 mm and a length of about 10 cm to 100 cm, said channel being surrounded on all sides by spaces, cavities or pockets (2) with a width of about 1 mm and a depth of about 5 mm in a direction perpendicular to the axis of the channel, said exhaust gases flowing therein at a velocity of between about 5 m/s and about 50 m/s, such that the particles are deposited on the walls of said spaces, cavities or pockets and do not obstruct the transverse section of said flow channels.

10. Method according to claim 9, **characterised in that** it consists additionally in oxidising the particles deposited on the walls of said spaces, cavities or pockets by means of an appropriate catalyst deposited on said walls of the channels or by using fuel additives, burners or other means.
